(19) Europäisches Patentamt
European Patent Office
Office européen des brevets

(11) EP 1 655 854 A1

(12) **EUROPEAN PATENT APPLICATION**

(43) Date of publication:
**10.05.2006 Bulletin 2006/19**

(51) Int Cl.:
***H04B 1/707*** *(2006.01)*

(21) Application number: **04292612.1**

(22) Date of filing: **03.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(71) Applicant: **ALCATEL**
**75008 Paris (FR)**

(72) Inventors:
- **Wild, Thorsten**
**70499 Stuttgart (DE)**
- **Heok, Conelis**
**71732 Tamm (DE)**

(74) Representative: **Richardt, Markus Albert et al**
**Patentanwalt**
**Leergasse 11**
**65343 Eltville am Rhein (DE)**

Remarks:
Amended claims in accordance with Rule 86 (2) EPC.

# (54) Method for calculating a path profile in a cellular communication system

(57) The invention relates to a method for calculating a path profile in a cellular communication system, whereby the method can be used by a spread spectrum receiver such as a CDMA receiver. Furthermore, the method can be used by the logic of a base station and/or a subscriber station comprising such a spread spectrum receiver.

In CDMA reception the delay of each incoming path must be calculated. Incoming paths can however only be detected if the signal-to-noise-ratio is sufficient.

It is an object of the invention to provide a possibility for calculating a path profile with an improved detection of weak signals having a poor SNR.

The object is achieved by applying three methods. One method applies the concept of energetic combining and adds the square of the absolute values of all time slots.

Two methods apply the concept of coherent profiling and add the complex amplitudes of two consecutive time slots, whereby one solution applies this concept to at least two neighboured time slots, and the other solution to at least two neighboured slots with an overlap.

**Fig. 2**

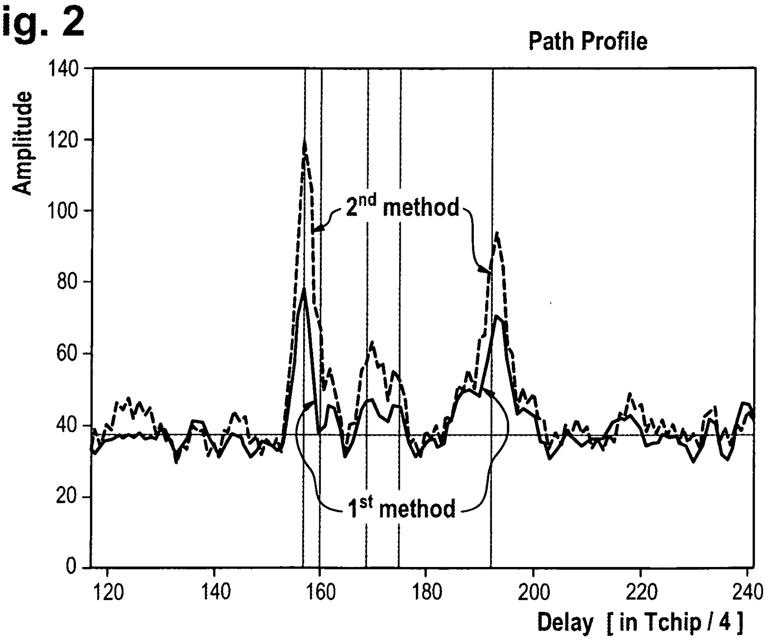




Printed by Jouve, 75001 PARIS (FR)

## Description

### Field of the invention

The invention relates to the field of wireless digital communication according to the preambles of the independent claims. In particular it relates to the field of wireless transmission and reception of digital information by a UMTS (Universal Mobile Communication System) system. More specifically, the invention relates to a CDMA receiver for a cellular communication system and a base station or a subscriber station (mobile station) comprising said CDMA receiver. The CDMA receiver applies a method for calculating a path profile which may be implemented as a computer software.

Cellular communication systems are well known. Such cellular communication systems comprise cells or radio zones, together covering a given geographical area. The cells include base stations that, through control and communication channels, establish and maintain communication links with mobile communication devices that are comprised in the system, and communicate with the mobile communication devices through established communication links.

One type of a cellular communication system is a so-called Direct Sequence CDMA (Code Division Multiple Access) spread spectrum system. In such a CDMA spread spectrum system, in addition to a transmitter, the mobile communication device has a CDMA receiver, typically a so-called RAKE receiver, with a number of RAKE fingers to resolve components of a multi-path received spread spectrum signal and to diversity combine resolved components so as to improve the signal-to-noise ratio of the received signal. The spread spectrum signals are received from transmitters that spread data signals over a frequency band by using spreading sequences. Elements in such a sequence are so-called chips.

In CDMA and WCDMA (Wideband Code Division Multiple Access) reception it is necessary to estimate the delay of each incoming path with respect to a certain reference point, for example with respect to the start of the observation window which has been chosen. To do this a path profile is calculated. Such a path profile is shown in Fig. 1. The receiver detects a signal having an amplitude which is plotted in arbitrary units versus the delay in an oversampled chip grid. In Fig. 1 the chip grid is four times oversampled with respect to the chosen reference point. The horizontal line represents the noise floor. A signal having a delay is detected if the signal-to-noise-ratio (SNR) is sufficient. In this case its corresponding peak in the path profile is pronounced enough as in the case of Fig. 1 The radio channel of this example contains several time resolvable delays due to multipath[R1] propagation.

It is an object of the invention to provide a method for calculating a path profile with an improved detection of weak signals having a poor SNR.

Another object is to provide a CDMA receiver and a base station enabling the detection of weak signals having a poor SNR. Still another object is the provision of a computer program product as an implementation of the above method.

According to the present invention the above mentioned object is achieved by the features of the independent claims. Further embodiments are described by the features of the sub claims.

As far as the method is concerned a first solution to achieve the above mentioned object will be called energetic combining for the purposes of this disclosure. In this approach the despreading vector $d_k$ of length K, which already contains pilot pattern compensation, is correlated with the input sequence vector $s_k$ of length K over a length of P pilot symbols inside a single time slot. P and K are integers. In other words the Hadamard product $d_k \otimes s_k$ of $d_k$ and $s_k$ is summed up over all (oversampled) chips with index *k* forming the elements of $d_k$ and $s_k$ for a certain antenna *i* and a certain time slot *j*: $\sum_k d_{i,j,k} \otimes s_{i,j,k}$ .

The index *i* denotes the antenna out of a total of *I* antennas. The indices *i, j* and *k* are integers. As usual, the input sequence vector s represents the digital signal in the baseband at the output of the analogue/digital converter for each antenna i.

Now the square of the absolute value of the result is summed up over all antennas i and all slots *j* of a certain observation window. Doing this means performing a non-coherent averaging over all antennas i and all slots j of said observation window. This is repeated for all different delay values which shall be searched. In total

$$\sum_i \sum_j \left| \sum_k d_{i,j,k} \otimes s_{i,j,k} \right|^2$$

is calculated.

This energetic combining approach has the advantage that a change in the phase angle of the quantity

$\sum_k d_{ijk} \otimes s_{ijk}$ between two consecutive time slots j and $j$+1 can be arbitrary. In practise this means that the velocity of a mobile station with respect to the base station can be arbitrary.

Signals having a poor SNR can be detected even better in comparison to the above mentioned energetic combining approach when the summation of over the slots j is modified. In the energetic combining approach the summation over the slots j is a summation over real numbers $\left|\sum_k d_{ijk} \otimes s_{ijk}\right|^2$, whereby the quantities $\sum_k d_{ijk} \otimes s_{ijk}$ are complex numbers. It is however possible to add at least two of these quantities, and thus to add complex numbers, and then to calculate the square of its absolute value for all antennas i. In that case the quantities are chosen to stem from at least two consecutive time slots with indices $j$, $j$+1, $j$+2 ... If the complex quantities from exactly two consecutive time slots are added up $\sum_i \sum_j \left|\sum_k d_{i,j,k} \otimes s_{i,j,k} + \sum_k d_{i,j+1,k} \otimes s_{i,j+1,k}\right|^2$

In other words the summation over all slots is performed in such a way that the sum $\sum_k d_{i,j,k} \otimes s_{i,j,k}$ of a first time slot with index j is added to at least one corresponding second sum $\sum_k d_{i,j+1,k} \otimes s_{i,j+1,k}$ of a second and consecutive slot with index $j+1$, and the square of the resulting value is summed up over all antennas with index i and all slots This second solution is feasible when the phase angle of the quantity $\sum_k d_{ijk} \otimes s_{ijk}$ between two consecutive time slots doesn't exceed 90°. This corresponds to a total frequency offset between transmitter and receiver of 450 Hz, which comprises the Doppler offset (relevant when the receiver has a certain velocity with respect to the transmitter) and the oscillator frequency offset. 450 Hz is sufficient for almost all situations.

It is also possible to compensate the measured frequency offset between consecutive slots when calculating the path profile, so that even high offsets can be handled with this second solution.

The new summation over slots can be done in several ways. When summing up the index $j$ can chosen to be 1,2,3,4,5 ... In this case a summation over all integer values of $j$ is performed, and the summation over slots adds quantities $\sum_k d_{ijk} \otimes s_{ijk}$ for slots 1+2, 2+3, 3+4, 4+5 etc. In other words the quantities are summed up with an overlap.

As indicated above, the complex quantities of more than two consecutive time slots can be added. As an example the complex values of three time slots can be added as well. In this case the quantities $\sum_k d_{ijk} \otimes s_{ijk}$ are summed up for slots 1+2+3, 2+3+4, 3+4+5 etc with an increased overlap of two time slots instead of one time slot. If three and not two slots are added up in this way, the total frequency offset will be 450*(2/3) = 300 Hz only. The sensitivity will increase and the SNR will be even better.

Another possibility when summing up over all slots is that the summation is only performed for odd values of $j$. In this third solution the quantities are summed up for slots 1+2, 3+4, 4+5 etc and thus without an overlap. The computational burden is slightly reduced.

All three solutions show a good SNR of the path profile, whereby the SNR of the path profile of the second and the third solution is even better than the SNR of the first solution. The improved SNR allows an improved detection of incoming paths. Weaker paths which would otherwise not be detectable can also be detected. Furthermore, by detecting additional paths due to an increased SNR a time diversity can also be obtained. This is especially useful when using a linear array with low spatial diversity.

A spread spectrum receiver, preferably a CDMA receiver, and particularly a RAKE receiver, or a receiver with a RAKE-like finger processing structure can be adapted to use the above mentioned method to calculate a path profile. (Frage: ist ein "spread spectrum receiver" eine brauchbare Verallgemeinerung unter welche ein CDMA-Receiver fallen wurde?) In this case the increased path profile SNR due to the method according to the invention increases the number of detected paths and thus the number of possible RAKE fingers. This increases the SNR measured at the output of the RAKE finger combiner and thus the capacity of the air interface, for example the UTRAN interface in UMTS systems. The CDMA receiver, particularly if it is a RAKE receiver, may be a part of a base station or subscriber station for a cellular communication system such as an UMTS system.

The method is particularly useful when the path profile for a WCDMA signal is calculated.

It is particularly useful when the spread spectrum receiver is adapted to use the first solution according to the invention to calculate a path profile, and in addition the second and/or the third solution. As mentioned above, the second solution is feasible when the phase change of the quantity $\sum_k d_{ijk} \otimes s_{ijk}$ between two consecutive time slots doesn't exceed 90° corresponding to a total frequency offset of 450 Hz. The same is true for the third solution. If the spread spectrum receiver is able to perform a speed estimation (a Doppler frequency estimation) and a frequency offset estimation the total frequency offset can be estimated. If the total offset exceeds 450 Hz the first solution should be used, otherwise the second or the third solution with an improved SNR is preferable. Thus the above estimation can be used to switch between two modes of operation. In the alternative, the frequency offset is compensated when calculating the path profile.

The path profile calculation might be a summation over two antennas. The solution is however particularly useful when a summation over four or more antennas per sector is performed. The reason is that in this case the received signal level will be lowered by power control. This leads to a worse SNR with less pronounced peaks in the path profile, and correspondingly to greater problems in detecting incoming paths.

As mentioned above, the spread spectrum receiver may be adapted to use the above mentioned method to calculate a path profile. For that purpose, the receiver has a hardware logic like FPGAs, ASICs or EPROMs, digital signal processors or the like which provide the functionality to calculate the path profile. This hardware logic may have a firmware which can be downloaded from other devices such as computers. The firmware is a computer program product, which is directly loadable into the internal memory of a digital computer or into a computational entity such as a FPGA, an EPROM or the like, and which comprises software code portions for performing the method as described above when said product is running on a computer or the computational entity. The computer program product can be saved on a storage medium such as a hard disk, a CD of a DVD, or may be transmitted by means of electric carrier signals through a computer network such as the internet.

These and other aspects of the invention will be apparent from and elucidated with reference to the embodiments described thereafter. It should be noted that the use of reference signs shall not be construed as limiting the scope of the invention.

Fig. 1: shows the path profile when calculated with the first solution,

Fig. 2: shows the path profile when calculated with the second solution,

Fig. 3: shows the path profile when calculated with the third solution,

Fig. 4: is a sketch of the communication system having a logic to carry out the method according to the invention.

Fig. 1 shows a path profile calculated according to the first method according to the invention. A single 12.2 kbps link using a Pedestrian B propagation channel was calculated. The CDMA receiver had four antennas. The spreading factor was 256, the number of pilot symbols was 6, and there were 15 slots. A time slot consisted of 2560 chips with a DPCCH spreading factor of 256 and double chip rate sampling at the receiver. 60% of these 2560 chips are used for the summation with index *k*, meaning 256*2*6=3172 samples with double chip rate. If Tchip denotes the duration from a first chip to a second chip, then 192 values in a Tchip/2 grid were used and were interpolated to a Tchip/4 grid. For all 192 taps the value $\sum_i \sum_j \left| \sum_k d_{i,j,k} \otimes s_{i,j,k} \right|^2$ was calculated. The 383 values were plotted versus the delay. The dashed vertical lines represent the actual incoming paths of the Pedestrian B propagation channel.

Fig. 2 shows the path profile for identical parameters as for Fig. 1 when calculated with the second method according to the invention. The values of two consecutive time slots were added without overlap, such that complex values of $\sum_k d_{i,j,k} \otimes s_{i,j,k}$ were added up:

$$\sum_i \sum_j \left\{ \left| \sum_k d_{i,k,1} \otimes s_{i,j,1} + \sum_k d_{i,j,2} \otimes s_{i,j,2} \right|^2 + \left| \sum_k d_{i,j,3} \otimes s_{i,j,3} + \sum_k d_{i,j,4} \otimes s_{i,j,4} \right|^2 + \dots + \left| \sum_k d_{i,j,14} \otimes s_{i,j,14} + \sum_k d_{i,j,15} \otimes s_{i,j,15} \right|^2 \right\}$$

This approach may be called a neighboured slots coherent combining.

The corresponding values obtained by means of the first method are added to the plot. As can be seen the peaks are more pronounced now such that the SNR is improved.

Fig. 3 shows the path profile for identical parameters as for Fig. 1 when calculated with the third method according to the invention. Two consecutive time slots were added with overlap. In other words the values of time slots 1+2, 2+3, 3+4 etc were added in the following way:

$$N * \sum_i \sum_j \left\{ \left| \sum_k d_{i,j,1} \otimes s_{i,j,1} + \sum_k d_{i,j,2} \otimes s_{i,j,2} \right|^2 + \left| \sum_k d_{i,j,2} \otimes s_{i,j,2} + \sum_k d_{i,j,3} \otimes s_{i,j,3} \right|^2 + \left| \sum_k d_{i,j,3} \otimes s_{i,j,3} + \sum_k d_{i,j,4} \otimes s_{i,j,4} \right|^2 + \dots + \left| \sum_k d_{i,j,14} \otimes s_{i,j,14} + \sum_k d_{i,j,15} \otimes s_{i,j,15} \right|^2 \right\}$$

An extra normalization factor of N=15/29 were used to keep the noise floor constant. This third solution has nearly double computational complexity than the second solution, but can be easily implemented in computational entities such as FPGAs,

Fig. 4 shows in a highly schematic way the communication system which implements the method as described above. A base station 1 communicates with a subscriber station 2 by sending signals by means of an antenna array 3 to the corresponding antenna array 3' of subscriber station 2. Both devices are UMTS devices operating at frequencies below 11 GHz according to the IEEE 802.16 standard. Base station 1 and subscriber station 2 each comprise a spread spectrum receiver 4, 4'.

The base station 1 and/or the subscriber station 2 estimates the Doppler frequency offset and/or the frequency offset between the base station 1 and the subscriber station 2. The spread spectrum receiver 4, 4' performs a non-coherent averaging according to the first solution if the estimated offset is above the predefined threshold value. If the estimated offset is below the predefined threshold value a coherent averaging according to the second solution or the third solution is carried out.

## Claims

1. Method for calculating a path profile in a cellular communication system, whereby the Hadamard product $d_k \otimes s_k$ of the despreading vector $d_k$ and the input sequence vector $s_k$ is evaluated, and the Hadamard product is summed up over all chips with index *k* forming the elements *of* $d_k$ and $s_k$ for a certain antenna with index i and for a certain time slot with index *j* ($\sum_k d_{i,j,k} \otimes s_{i,j,k}$), **characterized in that** the square of the absolute value of this sum is summed up over all antennas and all time slots ($\sum_i \sum_j \left| \sum_k d_{i,j,k} \otimes s_{i,j,k} \right|^2$).

2. Method according to the preamble of claim 1, **characterized in that** for summing up over all time slots the sum

$\sum_k d_{i,j,k} \otimes s_{i,j,k}$ of a first time slot with index $j$ is added to at least one corresponding second sum $\sum_k d_{i,j+1,k} \otimes s_{i,j+1,k}$ of a second and consecutive time slot with index $j$+1, and the square of the resulting value is summed up over all antennas and all time slots.

**3.** Method according to claim 2, **characterized in that** for summing up over all time slots the sum of a first time slot with index j is added to the sum of exactly one second and consecutive time slot with index *j+1*

$$(\sum_i \sum_j \left| \sum_k d_{i,j,k} \otimes s_{i,j,k} + \sum_k d_{i,j+1,k} \otimes s_{i,j+1,k} \right|^2).$$

**4.** Method according to claim 2 or 3, **characterized in that** the summation over all time slots is performed for all integer values of *j*.

**5.** Method according to claim 2 or 3, **characterized in that** the summation over all time slots is only performed for odd integer values of *j*.

**6.** Method according to claim 1 or 2, **characterized in that** the summation over at least four antennas is performed.

**7.** Method according to claim 1 or 2, **characterized in that** the path profile for a WCDMA signal is calculated.

**8.** Method according to claim 1 or 2, **characterized in that** it runs on a computer.

**9.** Method for operating a base station and/or a subscriber station, **characterized in that** the base station and/or the subscriber station estimates the Doppler frequency offset and/or the frequency offset between the base station and the subscriber station, that the method according to claim 1 is carried out if the estimated offset is above a predefined threshold value, and that the method according to claim 2 is carried out if the estimated offset is below the predefined threshold value.

**10.** Computer program product, directly loadable in the internal memory of a digital computer, comprising software code portions for performing the method according to claim 8 when said product is running on a computer.

**11.** Computer program product according to claim 10 on a storage medium or transmitted by means of electric signals through a computer network.

**12.** Spread spectrum receiver, adapted to calculate a path profile by applying the method according to any of the claims 1 to 8.

**13.** Spread spectrum receiver according to claim 12 adapted to be a CDMA receiver.

**14.** Spread spectrum receiver according to claim 13 adapted to be a RAKE receiver.

**15.** Base station and/or subscriber station for a cellular communication system, comprising a spread spectrum receiver according to one of the claim 12 to 14, or the computer program according to claim 10 or 11, or being adapted to carry out the method according to claim 9.

**Amended claims in accordance with Rule 86(2) EPC.**

**1.** Method for operating a base station and/or a subscriber station, whereby the base station and/or the subscriber station estimates the Doppler frequency offset and/or the frequency offset between the base station and the subscriber station, whereby a path profile in a cellular communication system is calculated, whereby the Hadamard

product $d_k \otimes s_k$ of the despreading vector $d_k$ and the input sequence vector $s_k$ is evaluated, whereby the Hadamard product is summed up over all chips with index k forming the elements of $d_k$ and $s_k$ for a certain antenna with index $i$ and for a certain time slot with index $j$ $(\sum_k d_{i,j,k} \otimes s_{i,j,k})$, whereby in the case that that the estimated offset is below the predefined threshold value the square of the absolute value of this sum is summed up over all antennas and all time slots $(\sum_i \sum_j \left|\sum_k d_{i,j,k} \otimes s_{i,j,k}\right|^2)$, and whereby in the case that the estimated offset is below the predefined threshold value for summing up over all time slots the sum $\sum_k d_{i,j,k} \otimes s_{i,j,k}$ of a first time slot with index $j$ is added to at least one corresponding second sum $\sum_k d_{i,j+1,k} \otimes s_{i,j+1,k}$ of a second and consecutive time slot with index $j+1$, and the square of the resulting value is summed up over all antennas and all time slots.

**2.** Method according to claim 2, **characterized in that** in the case that the estimated offset is below the predefined threshold value for summing up over all time slots the sum of a first time slot with index $j$ is added to the sum of exactly one second and consecutive time slot with index $j+1$ $(\sum_i \sum_j \left|\sum_k d_{i,j,k} \otimes s_{i,j,k} + \sum_k d_{i,j+1,k} \otimes s_{i,j+1,k}\right|^2)$.

**3.** Method according to claim 1 or 2, **characterized in that** in the case that the estimated offset is below the predefined threshold value the summation over all time slots is performed for all integer values of $j$.

**4.** Method according to claim 1 or 2, **characterized in that** in the case that the estimated offset is below the predefined threshold value the summation over all time slots is only performed for odd integer values of $j$.

**5.** Method according to claim 1, **characterized in that** the summation over at least four antennas is performed.

**6.** Method according to claim 1, **characterized in that** the path profile for a WCDMA signal is calculated.

**7.** Method according to claim 1, **characterized in that** it runs on a computer.

**8.** Computer program product, directly loadable in the internal memory of a digital computer, comprising software code portions for performing the method according to claim 7 when said product is running on a computer.

**9.** Computer program product according to claim 8 on a storage medium or transmitted by means of electric signals through a computer network.

**10.** Spread spectrum receiver, adapted to calculate a path profile by applying the method according to any of the claims 1 to 7.

**11.** Spread spectrum receiver according to claim 10 adapted to be a CDMA receiver.

**12.** Spread spectrum receiver according to claim 10 adapted to be a RAKE receiver.

**13.** Base station and/or subscriber station for a cellular communication system, comprising a spread spectrum receiver according to one of the claim 10 to 12, or the computer program according to claim 8 or 9.

Fig. 1

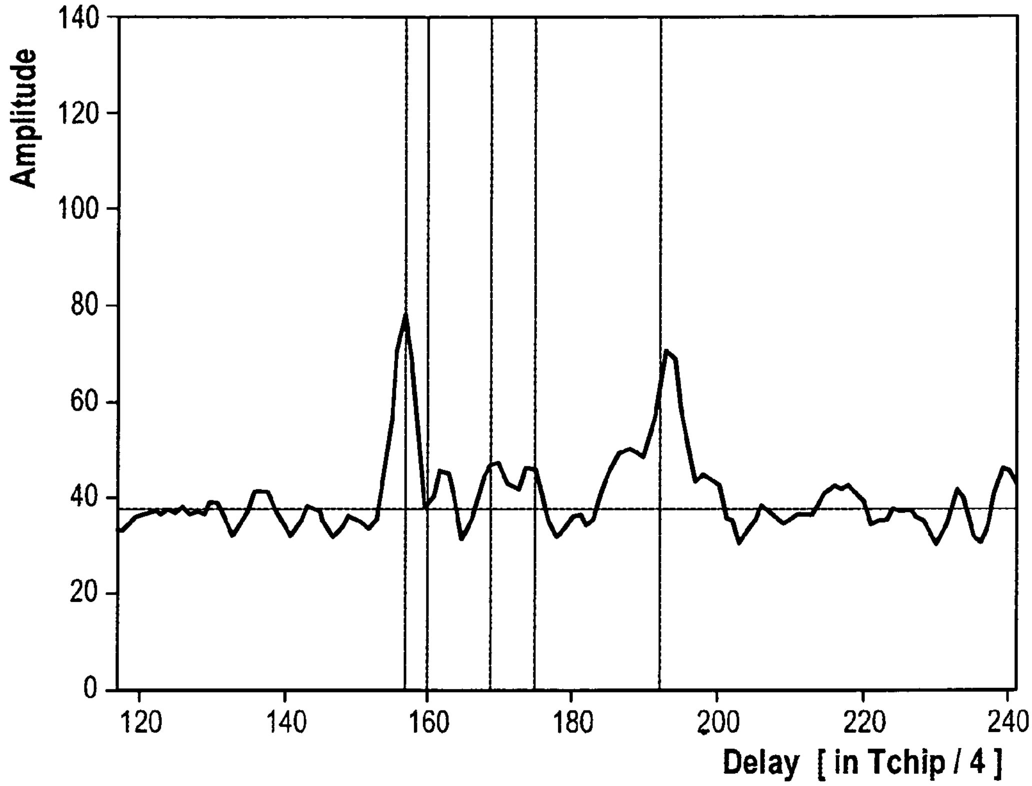
140
120
100
80
60
40
20
0
Amplitude
120
140
160
180
200
220
240
Delay [ in Tchip / 4 ]

Fig. 2

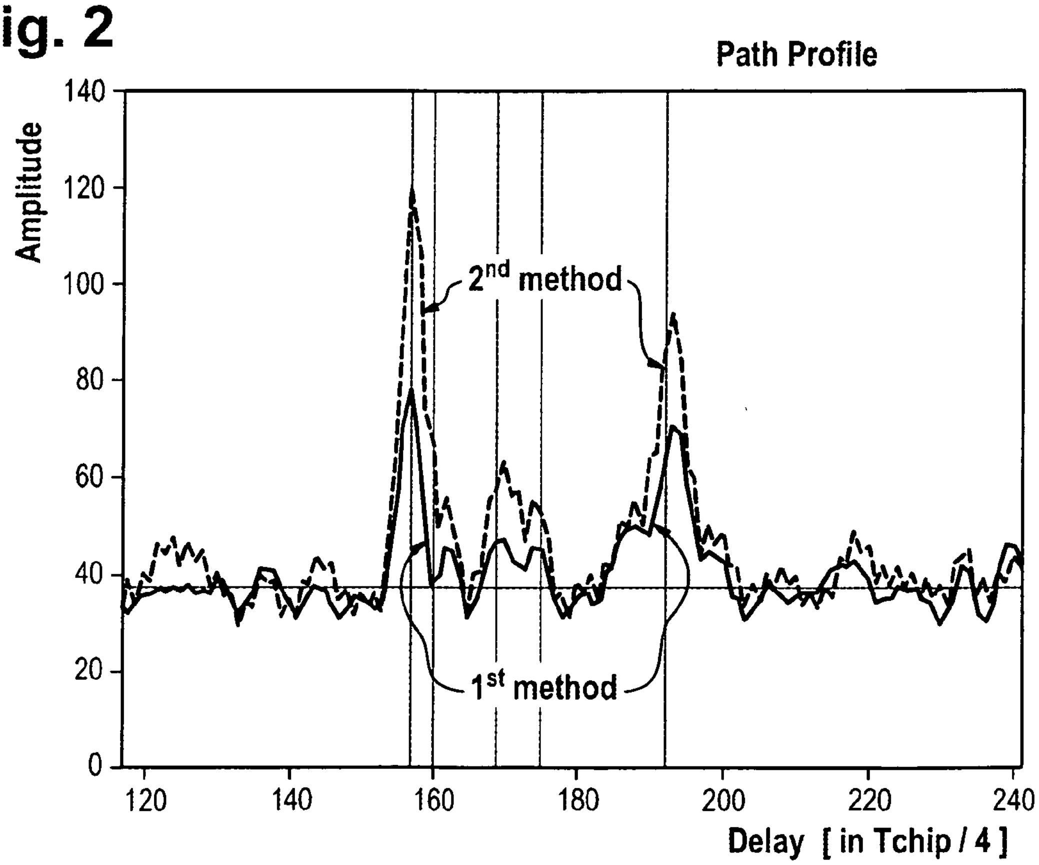
Path Profile
140
120
100
80
60
40
20
0
Amplitude
2nd method
1st method
120
140
160
180
200
220
240
Delay [ in Tchip / 4 ]

Fig. 3

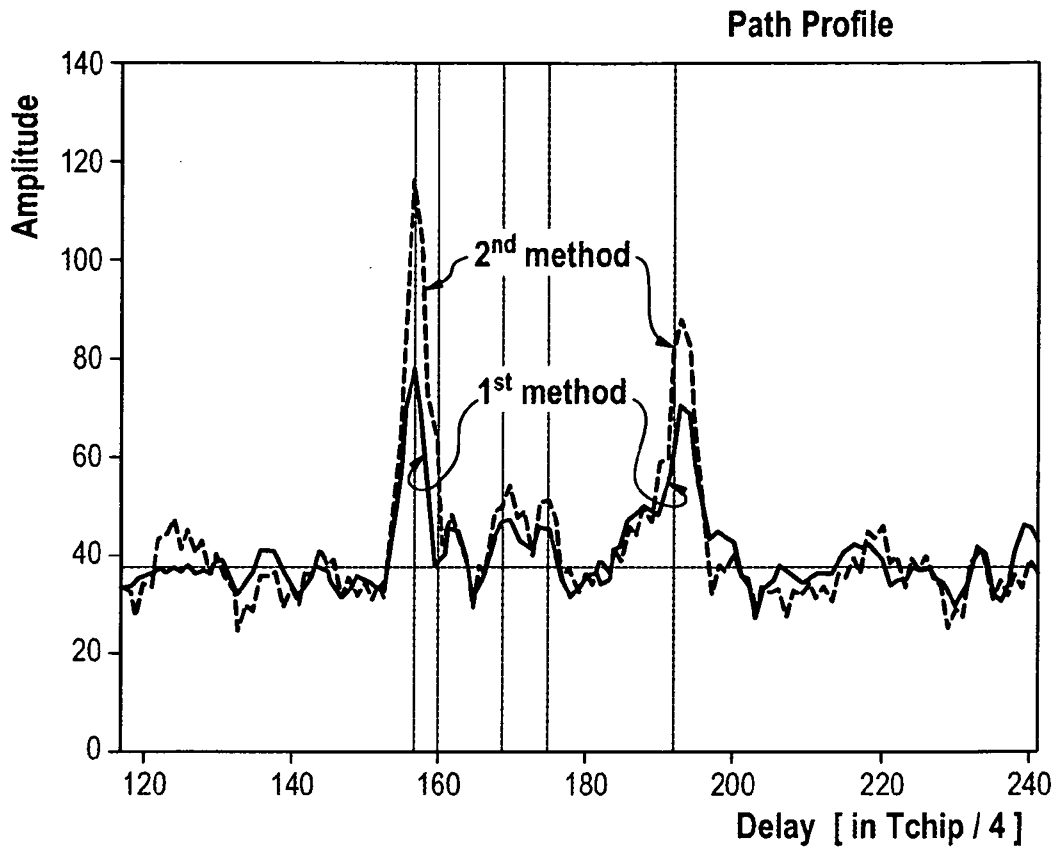
Path Profile
Amplitude
140
120
100
80
60
40
20
0
120
140
160
180
200
220
240
Delay [ in Tchip / 4 ]
2nd method
1st method

Fig. 4

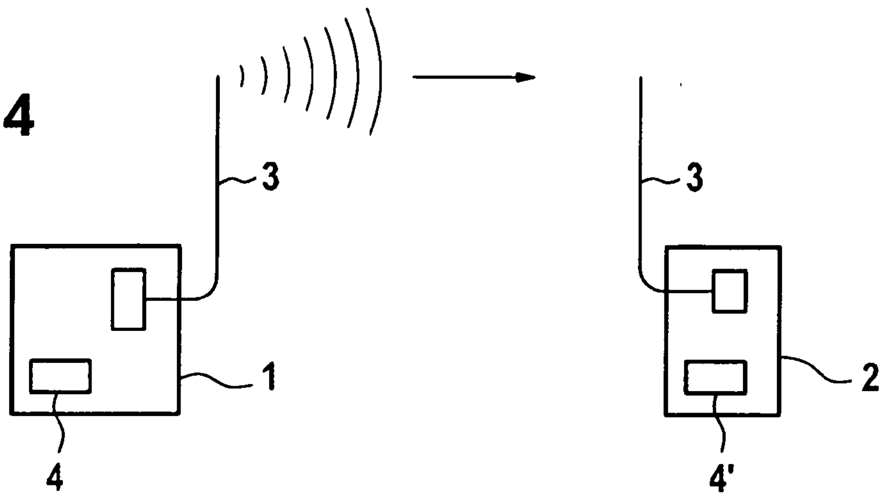
3
3
1
2
4
4'

European Patent Office

# EUROPEAN SEARCH REPORT

Application Number
EP 04 29 2612

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 069 696 A (ALCATEL)<br>17 January 2001 (2001-01-17)<br>* abstract; figures 1-7 *<br>* paragraphs ‘0004!, ‘0010!, ‘0014! * | 1,6-8,<br>10-15 | H04B1/707 |
| X | EP 0 756 391 A (MATRA COMMUNICATION; MATRA NORTEL COMMUNICATIONS)<br>29 January 1997 (1997-01-29)<br>* abstract; figures 1,2 *<br>* page 2, line 5 - page 3, line 28 * | 1,6-8,<br>10-15 | |
| A | GOLLAMUDI S ET AL: "Low complexity adaptive receiver for CDMA with multipath fading"<br>PERSONAL WIRELESS COMMUNICATIONS, 1997 IEEE INTERNATIONAL CONFERENCE ON MUMBAI, INDIA 17-19 DEC. 1997, NEW YORK, NY, USA,IEEE, US,<br>17 December 1997 (1997-12-17), pages 52-56, XP010268107<br>ISBN: 0-7803-4298-4<br>* Sections I - III * | 1,6-8,<br>10-15 | TECHNICAL FIELDS SEARCHED (Int.Cl.7)<br>H04B |
| A | HOLMA H ET AL: "WCDMA for UMTS: Radio Access for Third Generation Mobile Communications , MULTIPATH RADIO CHANNELS AND RAKE RECEPTION"<br>WCDMA FOR UMTS: RADIO ACCESS FOR THIRD GENERATION MOBILE COMMUNICATIONS, XX, XX, 2001, pages 30-33, XP002249973<br>* page 33 * | 1,6-8,<br>10-15 | |
| X | US 6 370 397 B1 (POPOVI&CACUTE ET AL)<br>9 April 2002 (2002-04-09)<br>* abstract; figure 8 *<br>* column 8, line 26 - line 65 *<br>-/-- | 2-8,<br>10-15 | |

The present search report has been drawn up for all claims

| Place of search | Date of completion of the search | Examiner |
|---|---|---|
| Munich | 27 July 2005 | Galli, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 04 29 2612

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 731 622 B1 (FRANK GEORG ET AL) 4 May 2004 (2004-05-04)<br>* abstract; figures 7,9 *<br>* column 9, line 62 - column 10, line 3 *<br>* column 10, line 50 - column 11, line 53 *<br>* column 12, line 61 - column 16, line 10 *<br>----- | 2-8, 10-15 | |
| X | US 6 256 338 B1 (JALLOUL LOUAY ET AL) 3 July 2001 (2001-07-03)<br>* abstract; figures 1,9 *<br>* column 1, line 21 - column 3, line 32 *<br>* column 5, line 20 - line 44 *<br>----- | 2-8, 10-15 | |
| X | US 6 067 315 A (SANDIN ET AL) 23 May 2000 (2000-05-23)<br>* abstract; figures 4-7 *<br>* column 1, line 48 - line 66 *<br>* column 3, line 62 - column 4, line 33 *<br>* column 5, line 1 - line 29 *<br>* column 5, line 61 - column 6, line 51 *<br>* column 7, line 3 - line 29 *<br>* column 8, line 20 - line 35 *<br>----- | 1,2,9,15 | TECHNICAL FIELDS SEARCHED (Int.Cl.7) |
| Y | US 5 757 846 A (VASUDEVAN ET AL) 26 May 1998 (1998-05-26)<br>* abstract; figure 3 *<br>* column 1, line 59 - column 2, line 4 *<br>* column 3, line 43 - line 61 *<br>* column 5, line 16 - column 6, line 19 *<br>----- | 1,2,9,15 | |
| Y | US 6 373 882 B1 (ATARIUS ROOZBEH ET AL) 16 April 2002 (2002-04-16)<br>* abstract; figures 3-5 *<br>* column 3, line 37 - line 61 *<br>* column 4, line 48 - column 5, line 33 *<br>* column 6, line 28 - line 42 *<br>----- | 1,2,9,15 | |

The present search report has been drawn up for all claims

| Place of search | Date of completion of the search | Examiner |
|---|---|---|
| Munich | 27 July 2005 | Galli, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number
EP 04 29 2612

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

# LACK OF UNITY OF INVENTION SHEET B

Application Number
EP 04 29 2612

The Search Division considers that the present European patent application does not comply with the requirements of unity of invention and relates to several inventions or groups of inventions, namely:

1. claims: 1,6-8,10-15

   method, computer program and device for calculating a path profile according to a non-coherent algorithm

   ---

2. claims: 2-8,10-15

   method, computer program and device for calculating a path profile according to an at least partially coherent algorithm

   ---

3. claims: 1,2,9,15

   method and base or subscriber station which can adaptively choose the algorithm used for calculating the path profile according to the Doppler or frequency offset.
   This way according to the channel conditions (the offset can be considered an estimation of how fast the channel changes) it can be decided which goal has an higher priority when calculating a delay profile: either using a simple method or a more complicated one but with better results.

   ---

## ANNEX TO THE EUROPEAN SEARCH REPORT ON EUROPEAN PATENT APPLICATION NO. EP 04 29 2612

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-07-2005

| Patent document cited in search report | Publication date | Patent family member(s) | Publication date |
|---|---|---|---|
| EP 1069696 A | 17-01-2001 | EP 1069696 A1 | 17-01-2001 |
| | | CN 1287414 A ,C | 14-03-2001 |
| | | JP 2001036432 A | 09-02-2001 |
| | | US 6496494 B1 | 17-12-2002 |
| EP 0756391 A | 29-01-1997 | FR 2737362 A1 | 31-01-1997 |
| | | CA 2181670 A1 | 26-01-1997 |
| | | DE 69618102 D1 | 31-01-2002 |
| | | DE 69618102 T2 | 22-08-2002 |
| | | EP 0756391 A1 | 29-01-1997 |
| | | US 5818866 A | 06-10-1998 |
| US 6370397 B1 | 09-04-2002 | AU 755811 B2 | 19-12-2002 |
| | | AU 4302699 A | 23-11-1999 |
| | | CA 2330926 A1 | 11-11-1999 |
| | | CN 1308790 A ,C | 15-08-2001 |
| | | EP 1082820 A1 | 14-03-2001 |
| | | JP 2002514032 T | 14-05-2002 |
| | | WO 9957819 A1 | 11-11-1999 |
| | | TW 428375 B | 01-04-2001 |
| | | US 6731622 B1 | 04-05-2004 |
| US 6731622 B1 | 04-05-2004 | DE 19824218 C1 | 23-03-2000 |
| | | US 6370397 B1 | 09-04-2002 |
| | | AU 756608 B2 | 16-01-2003 |
| | | AU 4263199 A | 20-12-1999 |
| | | CA 2333479 A1 | 09-12-1999 |
| | | CN 1311924 A | 05-09-2001 |
| | | WO 9963677 A1 | 09-12-1999 |
| | | EP 1303058 A2 | 16-04-2003 |
| | | EP 1082821 A1 | 14-03-2001 |
| | | JP 2002517938 T | 18-06-2002 |
| | | AU 755811 B2 | 19-12-2002 |
| | | AU 4302699 A | 23-11-1999 |
| | | CA 2330926 A1 | 11-11-1999 |
| | | CN 1308790 A ,C | 15-08-2001 |
| | | EP 1082820 A1 | 14-03-2001 |
| | | JP 2002514032 T | 14-05-2002 |
| | | WO 9957819 A1 | 11-11-1999 |
| | | TW 428375 B | 01-04-2001 |
| US 6256338 B1 | 03-07-2001 | EP 1135874 A1 | 26-09-2001 |
| | | JP 2002531994 T | 24-09-2002 |
| | | WO 0033486 A1 | 08-06-2000 |
| US 6067315 A | 23-05-2000 | AU 1448099 A | 16-06-1999 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 29 2612

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-07-2005

| Patent document cited in search report | Publication date | Patent family member(s) | Publication date |
|---|---|---|---|
| US 6067315 A | | CA 2312772 A1 | 10-06-1999 |
| | | CN 1103149 C | 12-03-2003 |
| | | EP 1040596 A1 | 04-10-2000 |
| | | JP 2001525628 T | 11-12-2001 |
| | | WO 9929046 A1 | 10-06-1999 |
| US 5757846 A | 26-05-1998 | NONE | |
| US 6373882 B1 | 16-04-2002 | AT 235762 T | 15-04-2003 |
| | | AU 1433600 A | 29-05-2000 |
| | | CN 1132328 C | 24-12-2003 |
| | | DE 69906349 D1 | 30-04-2003 |
| | | EP 1125372 A1 | 22-08-2001 |
| | | JP 2002530003 T | 10-09-2002 |
| | | WO 0028675 A1 | 18-05-2000 |

EPO FORM P0459

For more details about this annex : see Official Journal of the European Patent Office, No. 12/82